# EUROPEAN PATENT APPLICATION

(11) **EP 4 635 665 A1**
(43) Date of publication of application: **22.10.2025**
(21) Application number: 24170523.5
(22) Date of filing: 16.04.2024
(51) Int. Cl.: B23K 9/028, B23K 9/035, B23K 31/02, B23K 33/00, H02G 3/04, H02G 3/06, F16L 13/02

(54) **PIPE CONNECTOR AND METHOD FOR CONNECTING PIPE ENDS WITH LINES AND HARNESSES INSIDE**

(71) Applicant: Airbus Operations GmbH, 21129 Hamburg (DE)
(72) Inventor: Vehrs, Torsten, 21129 Hamburg (DE); Melcher, Michael, 21129 Hamburg (DE); Riedel, Markus, 21129 Hamburg (DE)
(74) Representative: Isarpatent

(57) **Abstract**

The present invention provides a pipe connector (100), wherein the pipe connector (100) has a sleeve (101) which can be arranged concentrically to pipe sections (103, 104, 108) with a first diameter (D1) and has a first sleeve section (110) and a second sleeve section (120) which can be welded to the first sleeve section (110) to form the sleeve (101) with the sleeve (101) having a second diameter (D2) which is larger than that of the pipe sections (103, 104, 108) of a pipe system (205) and a method for connecting pipe ends in a pipe system (205) using the pipe connector (101).

## Description

The present invention pertains to a pipe connector and a method for connecting pipe ends with lines and harnesses inside.

Although it can be used in many applications, the present invention and the problems underlying it are explained in more detail in relation to aircrafts. However, the devices and method described can likewise be used in static installations, in vehicles in all sectors of the transport industry (but not limited to this), e.g. for road vehicles, for rail vehicles or for watercraft.

Tank structures containing liquids, more specific cryogenic stored liquids such as liquid hydrogen (LH2) can serve as jet-fuel alternative in the future. Such structures also comprise pipe structures such as pipe systems or pipework that are used to guide cables and wires that are required within the structure. In such systems, pipes are used that are made of a weldable material, primarily steel or stainless steel to build the pipe system or pipework. During the welding process, for example to connect individual pipe sections of the pipe system or pipework, heat protection elements such as glass fiber covers or sleeves are used to shield the cable or pipe or harnesses inside the pipe from heat generated during the welding process. Once the welding process is completed, the heat protection elements are removed and do not remain in the pipes as long as the pipe system or pipework is open.

In a final welding process, the pipe system is closed and is no longer accessible once the welding is completed. If during a final welding process sealing the pipework heat protection elements, that are used in order to protect the cables or lines from being destroyed by heat during welding, remain in the pipe system or pipework, these can lead to pollution by particles or other residues of the thermal protector in the overall system, especially when used in LH2 systems.

Against this background, it is an object of the present invention to find a heat protection that can remain in the closed pipe system without interfering or leaving particles or debris and to ensure high quality in manufacturing pipe systems.

This object is achieved by a pipe connector having the features of claim 1 and method for connecting pipe ends of a pipe system having the features of claim 11.

According to a first aspect of the invention, a pipe connector comprising a sleeve, having in particular a cylindrical configuration, which can be arranged concentrically to pipe sections is provided. The sleeve comprises a first and a second sleeve section, wherein the second sleeve section can be welded to the first sleeve section, and the sleeve has a diameter larger than that of the pipe sections. This has the advantage that thermal protection is provided by the part itself due to the increased diameter of the sleeve.

A further aspect of the invention lies in a method for connecting pipe ends of a pipe system or pipework using a pipe connector according to the invention, wherein the method comprises the steps of connecting a first sleeve section to a first pipe end, connecting a second sleeve section to a second pipe end, and welding the first sleeve section to the second sleeve section. It is an advantage of the method that it provides a straightforward and efficient procedure for connecting pipe ends using the pipe connector while ensuring a heat protection for cables and lines or harnesses introduced and guided in the pipe system or pipework the ends of which are to be connected by welding.

Advantageous embodiments and further developments are apparent from the further dependent claims and from the description with reference to the figures.

According to another aspect of the invention, the sleeve sections can be welded by orbital inert gas welding. This has the advantage that that orbital inert gas welding provides precise and uniform welds, enhancing the overall structural integrity of the invention pipe connector while the sleeve provides a heat protection during welding that eliminates the need for additional protective layers or means.

According to an embodiment of the invention, the sleeve has an enlarged sleeve volume compared to the pipe sections. This has the advantage that a space is created between the sleeve and a wire or cable extending through the sleeve. Heat generated during welding and closing the sleeve can thus not impact the wire or cable. It is reached by an immanent heat protection provided by the pipe connector itself.

According to a further embodiment of the invention, the sleeve can be filled with inert gas during welding. It is an advantage of this feature that filling the sleeve with inert gas during welding helps to create a controlled welding environment, reducing the risk of oxidation and ensuring high-quality welds. Furthermore, the gas is also creating a positive cooling effect, hence supporting and further improving heat protection.

According to a further embodiment of the invention, the sleeve has a first and a second sleeve end, and the sleeve ends each taper concentrically towards the pipe sections. This has the advantage, that the invention pipe connector can be used with standard pipe configurations and enlarges those only in the area in which welding takes place thus omitting the requirement to use additional thermal protections means during welding that need to removed after welding is completed. Furthermore, tapering design facilitates smooth transition and alignment between the sleeve and pipe sections, reducing stress concentrations and enhancing the overall durability of the connection.

According to a further embodiment of the invention, the first and second sleeve ends each have an extension in the axial, i.e. longitudinal direction of the pipe connector, by pipe sections. This has the advantage that the axial extension provides additional support and reinforcement to the connection, minimizing the risk of dislocation or detachment under mechanical stress and allows for incorporating the pipe connector in and connecting it to a standard pipe of the pipework to be manufactured.

According to a further embodiment of the invention, at least one pipe section protrudes into the sleeve in the axial direction and/or protrudes completely or partially through the sleeve. This has the advantage that an additional guidance for lines and wires that are guided through the sleeve is provided that adds additional heat protection during welding by shielding the cable or wire in particular in the region of highest heat impact during welding.

According to a further embodiment of the invention, a first axial end of the pipe connector can be connected to a tank, in particular a tank for storing liquid nitrogen in an aircraft or vehicle, and a second axial end can be connected to a pipe system leading to the tank. This has the advantage that the pipe connector can be used to ultimately close the tank lines without the need to remove a separate heat protector applied during welding and thus avoids debris or particles remaining in the system.

According to a further embodiment of the invention, the pipe connector is designed as heat protection for pipes or cables routed in the pipe system, in particular during welding. It is an advantage of this embodiment, that the pipe connector serves a dual purpose, not only facilitating pipe connections but also providing effective heat protection for cables routed within the pipe, thereby enhancing safety and reducing the risk of damage during welding operations.

According to another embodiment of the invention, the pipe connector can be used to form a non-detachable connection, in particular a welded joint, between the pipe system and the tank. It is an advantage of this embodiment that the pipe connector enables the formation of a secure, non-detachable connection, particularly a welded joint between pipes and tanks, ensuring leak-proof and durable connections.

According to a further embodiment, the method further comprises introducing cables or lines into the pipe system and through the sleeve sections before the sleeve sections are welded. It is an advantage of this embodiment that it allows for simultaneous installation of cables or lines along with the pipe connecting process, optimizing workflow efficiency and reducing the need for additional installation steps and further heat protection means that would otherwise remain within the system.

According to a further embodiment, the method further comprises that welding of the sleeve sections is carried out in an orbital inert gas welding process. It is an advantage of this embodiment that precise and uniform welds are ensured that enhance the structural integrity of the pipe connector and minimizing the risk of defects or leakages in the welded joints.

According to a further embodiment, the sleeve is filled with an inert shielding gas before welding. It is an advantage of this embodiment that filling the sleeve with an inert shielding gas before welding creates a controlled welding environment, minimizes the risk of oxidation and ensures the integrity of the welds, thereby enhancing the overall quality and durability of the pipe connection.

According to a further embodiment, the method further comprises providing the sleeve as a heat protection for the cables or lines inserted in the pipe. It is an advantage of this embodiment that the sleeve not only serves as a conduit but also provides effective heat protection for cables or lines routed within the pipe, thereby safeguarding against heat damage and ensuring the reliability and longevity of the cables or lines in high-temperature environment during welding and omits additional thermal protectors to be introduced in the system.

The invention will be explained in greater detail with reference to exemplary embodiments depicted in the drawings as appended.
- Fig. 1: schematically depicts a sectional view of a pipe connector according to an embodiment of the invention;
- Fig. 2a, b, c: schematically depict sectional views of a of a pipe connector according to an embodiment of the invention;
- Fig. 3: schematically depicts several views of an embodiment of the pipe connector according to an embodiment of the invention; and
- Fig. 4: schematically depicts a side view of an embodiment of the pipe connector according to an embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

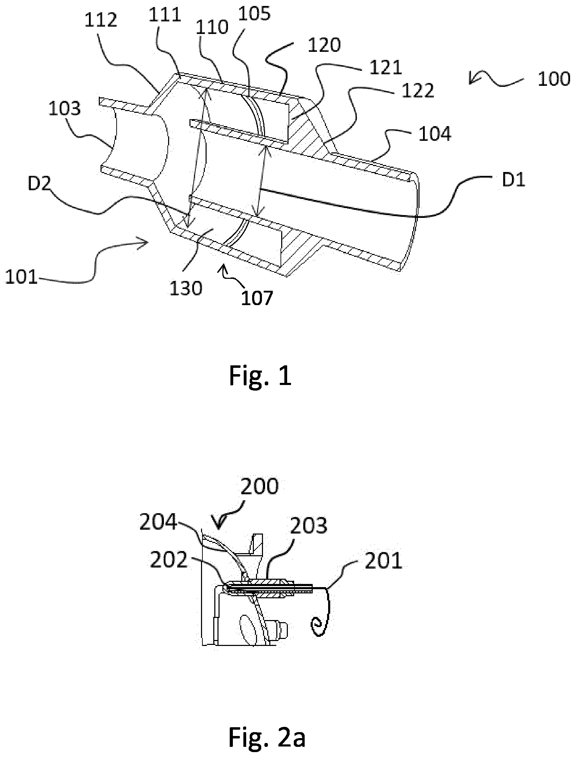

Figure 1 depicts a sectional view of a cylindrical pipe connector 100 according to the invention without limiting the invention to this design and configuration. The pipe connector 100 is designed as a sleeve 101, which has a first section 110 and a second section 120 and is formed from two distinct sections 110, 120 connected by a welding joint 105 in a circumferential joining region 107 to create the final sleeve 101 configuration. At the ends 111, 121 of the respective sections 110, 120, the sleeve 101 has a concentric tapering 112, 122 towards pipe sections 103, 104 extending the sleeve 101 on both sides. The connection between the two sleeve sections 110, 120 is established by a welded joint 105.

The sleeve 101 has a diameter D2 that is larger than the diameter D1 of the pipe sections 103, 104 and thus an internal volume 130 is formed inside the sleeve 101. As can be seen in Figure 1, one of the pipe sections 103, 104 protrudes into the second sleeve section 120 and into the internal volume 130 of the sleeve 101 and extends towards the first sleeve section 110. When the sleeve 101 is used as a pipe connector 100, the pipe section 104 protruding into the sleeve 101 is used to guide cables 201 through the sleeve 101. The internal volume 130 provides an insulating volume that ensures thermal protection for the cable extending through the sleeve 101. Before the sleeve sections 110, 120 are joined in an orbital welding process, the internal volume 130 of the sleeve 101 can be filled with an inert gas to support the welding process.

The pipe connector 101 is used to protect all kinds of wires and cables 201 from heat damage during a final welding process, in particular in the manufacture of nitrogen (N2) tanks 200, when no other heat protection can be applied and removed from the system after welding. The pipe connector 101 forms part of the pipe system 205 and remains in the H2 system after closing the pipe system 205.

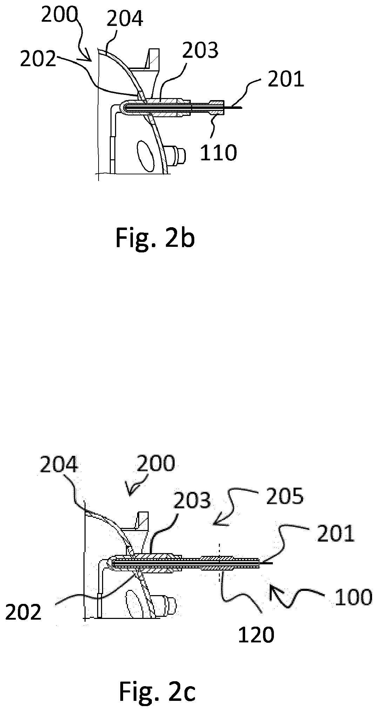

Fig. 2a, b and c schematically depict the process of connecting a tank 200, in particular a hydrogen tank 200, shown only partially, to the pipe connector 100 according to the invention. A cable 201 is inserted into the hydrogen tank 200 through an opening 202, as shown in Fig. 2a. The hydrogen tank 200 is provided with socket 203 that is already integrated into the tank shell 204. In a next step, as shown in Fig. 2b, the first section 110 of the pipe connector 100 is placed on a cable 201 protruding from the socket 203 and is then connected to the socket 203, for example by welding. This welding process can be carried out using a removable heat protector like a glass fiber overlay or protective sleeve on the cable 201, since this heat protector can be removed after welding from the still open system.

In the last step, as shown in Fig. 2c, the pipe system 205 of the hydrogen tank 200 is closed using the pipe connector 100 according to the invention. For this purpose, the second sleeve section 120 is pulled onto the cable 201 and then welded to the first sleeve section 110 already integrated in the system. Since the final welding seals the entire H2 pipe system 205, it is not possible to use removable heat protectors to protect the cable 201 against damage caused by heat generated during welding. Due to its configuration, the pipe connector 100 according to the invention provides the heat protection, as the increased diameter D2 of the sleeve 101 creates a gap between the welded joint 105 and the cable 201 that is guided through the sleeve 101. This gap provides the thermal protection in the required extend. The first sleeve section 110 and second sleeve section 120 are joined using an orbital welding process. During welding the internal volume 130 of the pipe connector 100 is filled with a shielding gas that remains in the internal volume 130 during the welding process and is removed from the system after completion of welding.

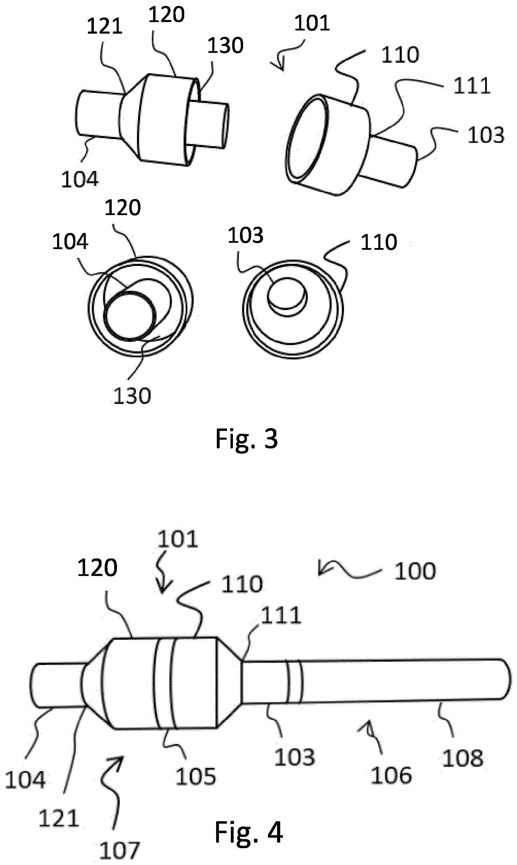

Fig. 3 schematically depicts different views of an embodiment of the two sleeve sections 110, 120 of the pipe connector 100 in the unassembled state. Both sleeve sections 110,120 have an extension at their respective ends 111, 121 formed by pipe sections 103, 104 attached to the sleeve 101. In the second sleeve section 120, the pipe section 104 is extended in such a way that it protrudes into the internal volume 130 of the sleeve 101. The first sleeve section 110 overlaps the protruding pipe section 104 as soon as the two sleeve sections 110, 120 are connected. The protruding pipe section 104 serves to guide a cable 201 extending through the pipe connector 100 and supplements the heat protection achievable by the pipe connector 100, and which is provided by the internal volume 130 of the sleeve 101 formed after welding the sleeve sections 110,120. In the lower part Fig. 3 depicts the two sleeve sections 110, 120 as described above in front view.

Fig. 4 schematically depicts the pipe connector 100 in the assembled state. The two cylindrical sleeve sections 110, 120 are provided as separate elements attached to each other in a circumferential joining region 107 and connected by welded joint 105, which is produced using an orbital welding process to form a cylindrical sleeve 101. While the pipe section 104 projecting from the left end 121 of the second sleeve section 120 in Fig. 4 can be connected to a tank 200 or other structure, the first sleeve section 110 has on the right end 111 a further pipe extension 106 formed by a welded-on pipe or pipe section 108. The ends 111, 121 of the sleeve 101 of the pipe connector 100 taper concentrically towards the respective pipe sections 103 ,104 and thus ensure a transition of the enlarged diameter D2 of the sleeve 101 towards a standard pipe system 205. Once the two sleeve sections 110, 120 have been welded, the system is closed and no longer allows access to the cable 201 routed in the pipe system 205. The fact that the pipe connector 100 is used as heat protection during welding means that further heat protection can be avoided due to the design of the pipe connector 100. This is particularly advantageous in hydrogen systems, as heat protection means remaining in the system, i.e. not provided by the pipe connector 100 itself, could lead to contamination and malfunctions in the system. This is prevented by the pipe connector 100 according to the invention.

### List of reference signs

- 100: pipe connector
- 101: sleeve
- 103: pipe section
- 104: pipe section
- 105: welded joint
- 106: extension
- 107: joining region
- 108: pipe section
- 110: first sleeve section
- 111: end
- 112: tapering
- 120: second sleeve section
- 121: end
- 122: tapering
- 130: internal volume
- 200: tank
- 201: cable
- 202: opening
- 203: socket
- 204: tank shell
- 205: pipe system
- D1: first diameter
- D2: second diameter

## Claims

1. Pipe connector (100), wherein the pipe connector (100) has a sleeve (101) which can be arranged concentrically to pipe sections (103, 104, 108) with a first diameter (D1) and has a first sleeve section (110) and a second sleeve section (120) which can be welded to the first sleeve section (110) to form the sleeve (101) with the sleeve (101) having a second diameter (D2) which is larger than that of the pipe sections (103, 104, 108) of a pipe system (205).

2. Pipe connector (100) according to claim 1, wherein the sleeve sections (110, 120) can be welded by orbital inert gas welding.

3. Pipe connector (100) according to claim 1 or 2, wherein the sleeve (101) has an enlarged sleeve volume compared to the pipe sections (103, 104, 108).

4. Pipe connector (100) according to any one of claims 1 to 3, wherein the sleeve (101) can be filled with inert gas during welding.

5. Pipe connector (100) according to any one of claims 1 to 4, wherein the sleeve (101) has a first and a second sleeve end (111, 121) and the sleeve ends (111, 121) each taper concentrically towards the pipe sections (103, 104, 108).

6. Pipe connector (100) according to any one of claims 1 to 5, wherein the first and second sleeve ends (111, 121) each have an extension in the axial direction formed by the pipe sections (103, 104, 108).

7. Pipe connector (100) according to any one of claims 1 to 6, wherein at least one pipe section (103, 104, 108) protrudes into the sleeve (101) in the axial direction and/or protrudes completely or partially through the sleeve (101).

8. Pipe connector (100) according to any one of claims 1 to 7, wherein axial ends (121) of the sleeve (101) can be connected to one of a tank (200), in particular a liquid nitrogen (LN2) tank (200) and the pipe system (205) leading to the tank (200).

9. Pipe connector (100) according to any one of claims 1 to 8, wherein the sleeve (101) provides heat protection for cables (201) or lines routed in the pipe system (205), in particular during welding.

10. Pipe connector (100) according to any one of claims 1 to 9, wherein the pipe connector (100) can be used to form a non-detachable connection, in particular a welded joint, between the pipe system (205) and the tank.

11. Method for connecting pipe ends in a pipe system (205) using a pipe connector (101) according to any one of claims 1 to 10, comprising the steps of: connecting a first sleeve section (110) to a first pipe end, connecting a second sleeve (120) section to a second pipe end, and welding the first sleeve section (110) to the second sleeve section (120).

12. Method according to claim 11, wherein cables (201) or lines are introduced into a pipe system (205) and through the sleeve sections (110, 120) before the sleeve sections (110, 120) are welded.

13. Method according to claim 11 or 12, wherein the welding of the sleeve sections (110, 120) is carried out in an orbital inert gas welding process.

14. Method according to any one of claims 11 to 13, wherein the sleeve (101) is filled with an inert shielding gas before welding.

15. Method according to any one of claims 11 to 14, wherein the sleeve (101) is provided as heat protection for the cables (201) or lines inserted in the pipe system (205).
